# EUROPEAN PATENT SPECIFICATION

(11) **EP 1 479 497 B1**
(45) Date of publication and mention of the grant of the patent: **19.07.2006**
(21) Application number: 04398004.4
(22) Date of filing: 14.05.2004
(51) Int. Cl.: B28C 5/18, F16H 37/02

(54) **Transmission reducer with application in concrete mixers**
Untersetzungsgetriebe für Betonmischmaschine
Réducteur de vitesse pour bétonnière

(30) Priority: 19.05.2003 PT 10295503
(43) Date of publication of application: 24.11.2004
(73) Proprietor: Simoes & Rodrigues, Lda, 3230 - 347 Penela (PT)
(72) Inventor: Rodrigues Simoes, Mario Jose, 3230 - 331 Penela (PT)
(74) Representative: Alagem Modiano, Lara S.

(56) References cited:
- EP-A1- 1 060 853
- EP-A2- 0 405 059
- DE-A1- 1 459 291
- US-A- 4 043 540
- US-A- 4 097 925
- US-A- 4 294 548

## Description

This invention concerns a transmission reducer to be used as a reducer of peripheral speed, in concrete or mortar mixers in the building industry.

The concrete mixers that are used nowadays generally have a motor which occupies a box that is too large, the motor has to have average/high power and, simultaneously, low rotation.

The motion power is applied by direct drive, accomplished by an endless screw or a gear wheel, which, in turn, gears in a circular rack that involves the mixing bucket.

Although it is has been used for several years, this traditional mechanical system of transmission/reduction presents many mechanical, environmental and even security disadvantages. The malfunctions are almost always caused by the cement residue or by the inert that fall and fixate themselves in the rack, which, because it surrounds the bucket and is made up of cast iron or cast steel, suffers from wear and warping that can cause clearances, and sometimes, the total block out of the bucket or the machine, or the overheating of the motor, which causes frequent stops.

On the other hand, because the transmission is directly applied in the more fish-bellied circular area of the bucket, almost always above the level of the materials that are put and mixed in whirlpool inside the bucket, all the vibrations of the contacts of the rack's teeth are transmitted to the walls of the bucket and magnified in the empty, fish-bellied space. The result is always a disturbing noise for the people who live in the proximity of the building site because the noise of the rack, plus the one from the movement of the inert, is sometimes unbearable and goes beyond the tolerable legal limits for the urban and living areas.

The concrete mixers are of common use and an indispensable tool in accommodation, maintenance works or even in the construction of urban buildings. In any work that requires the use of mortar the concrete mixer is mandatory.

Another inconvenient of the reducer that is being used until now is safety. The person who works with the concrete mixer has to be extra careful because his clothes can be caught in the rack and the rotary motion can drag him. As much as the prevention may be, accidents may happen and can be serious for the person working with the machine.

Concrete mixers according to the prior art are shown in German patent application DE 1 45 92 91 and U.S. patents 4,043,540 and 4,097,925

DE 1 45 92 91 discloses a concrete mixer with all the features of the preamble of independent claim 1, comprising a bucket and a motor, which are directly and solidly mounted on a wheelbarrow-like frame and connected by means of a three-stage transmission reducer, wherein the motor is arranged in the back of the bucket laterally to the bucket rotation shaft.

US 4,043,540 discloses a paddle assembly for a plaster or mortar mixer of the type having a pivotal drum and a rotatable paddle shaft in which the reduction stage, comprises a large drive gear which is in meshing engagement with a small pinion gear thereby driving the paddle shaft.

US 4,097,925 discloses a conventional cement mixer container rotatably supported on the truck frame and driven by a power gear train comprising a large driven gear driven by a gear chain in turn driven by an intermediate driven gear driven by a primary drive chain, in turn driven by a primary drive gear.

This transmission reducer is the result of the practical and technical knowledge of the inventor, of long studies which include the direct production of some components, assembly and separate and concerted officinal trials of the parts used to test the mechanical system, applying the reducer in a concrete mixer, picture 3, especially developed and constructed to be used in this reducer, where you can see the box (20) inside the structure of the base of the crankshaft where the reducer of this invention is set up, the access lid (24) for the installation and maintenance of the reducer, the box to keep the motor in a vertical position (21), the carrying chip at the basis of the bucket in heavy-duty steel and the centre of the crankshaft with bearings (22) which receives the shaft (8 pic. 1) of the reducer and the groove of the bilge of the bucket (23) without the traditional rack.

The reducer that is now presented is made up of a set of interconnected mechanical pieces, positioned according to picture 1, and includes a small pulley (18 pic. 1 and pic. 2) with just one groove for the trapezoidal chain, a mixed pulley (12 pic. 1 e pic. 2) made up of a large diameter wheel with a trapezoidal groove (12a pic. 2) fixed in the same axis to a small diameter gear wheel (12b pic. 2), a double rack (19 pic. 1 and pic. 2) that has two gear wheels fixed together, parallel and in the same axis, one of the wheels has a big diameter (19a pic. 2) and the other has a small one (19b pic. 2) and a simple large diameter rack (4 pic. 1 and pic. 2) that is fixed to the same axis (8 pic. 1 and pic. 2) that, as it is being set up in the centre of the crankshaft, with the support of bearings and the bushing (6 pic. 2) is secured at the basis of the concrete mixer's bucket (22 pic. 3).

The first pulley (18 pic. 1 and pic. 2) has a reference diameter almost equal to the diameter of the shaft of the motor used, and has a reference diameter similar to the one of the small gear wheels (12b e 19b pic. 2). The second pulley (12a pic 2) and the gear wheels (19a pic. 2) and (4 pic. 1 and pic. 2) have a similar reference diameter that is approximately four times bigger than the reference diameter of the driving pulley (18 pic. 1 and pic. 2).

For assembly, dismantling and adjustment of the chains in the racks and of the trapezoidal belt in the pulleys, the axis (8), which is incorporated in the basis of the concrete mixer's bucket, is fixed, while the axis (16) of the pulleys (12 and 19 pic.1 and pic. 2), just as the motor's tightening screws, are used in torn holes and equipped with locking anti-releasing.

In the larger concrete mixers and with buckets of greater capacity, the pulleys (18) and (12) may be replaced by others, with the same size, but with a double, or, if necessary, even triple, trapezoidal groove to allow the use of two or three trapezoidal chains, according to the case and the model of the concrete mixer.

The use of this reducer in concrete mixers of bigger capacity, industrial kind, may only eventually imply the reinforcement of the first reducing stage with one or two more trapezoidal belts, because all of the other system components remain. The distance between the outer axis (8) and (18) is always slightly bigger than the radius of the largest diameter of the bucket's bilge. Considering that the distance between the axis of the first driving pulley (18 des. N.1) and the axis of the bucket's rack (8 des. N.1) has to be bigger when the diameter of the bucket is larger, the variation of the distance is compensated with the increase of the reference length of the trapezoidal belt (13), and as the variation of the reference length is proportional to the diameter of the bucket, the peripheral speed is not changed.

In the first reducing stage the use of the trapezoidal belt (13) is suitable for the dampening of the start of the motor and the resistance of the bucket's inertial force if it is loaded.

In the second reducing stage, inertia being overcome, and with the peripheral speed substantially reduced and normalized, the resistance to the strain, tension and transmission without oscillations is more important, and this is why the gear racks and reinforced chains (1) are used. These are also used in the third reducing stage, for the same reasons.

This reducer can be set up in an autonomous box, so that it can be applied to any driving force, or set up directly in the bar that serves as a basis for the crankshaft of the concrete mixer according to (20 pic. 3).

This invention, besides being a more economical mechanical solution, which can be used in concrete mixers of several sizes, also allows the use of motorizations of a lesser energetic consumption, and it occupies a reduced but suitable space in the machine (20 pic. 3), this space is in the interior of the bars that structure the end of the bucket's crankshaft, with total protection and no risks for the person who works with the machine, and solves or minimizes some of the inconvenient that have been indicated, being noise or mechanical inconvenient.

The speed reducer of this invention uses simplified mechanical and technological means of high resistance and low costs if compared with the concrete mixers that are still in use. When this reducer is used in a concrete mixer of the urban kind, for small accommodation works or small constructions, like the concrete mixer in picture 3, the noise is reduced to very low levels and always lower that the inevitable noises of the inert when they are being mixed.

### NOMENCLATURE

| | |
|---|---|
| 1. Chain | 13. Trapezoidal belt |
| 2. Outer collar | 14. Bearing |
| 3. Cotter | 15. Support bushing for reducers 12 and 19 |
| 4. Rack | 16. 12 and 19 reducer's shaft |
| 5. Crankshaft's centre bearing | 17. Bearing |
| 6. Crankshaft's centre (bushing) | 18. Motor pulley |
| 7. Lubrication tip | 19. Double rack |
| 8. Bucket's shaft | 19a. Large gear wheel (receiver) |
| 9. Nut | 19b. Small gear wheel (reducer) |
| 10. O-ring | 20. Reducer's box |
| 11. Bearing | 21. Motor's box |
| 12 . Mixed pulley | 22. Base of the bucket that receives the shaft |
| 12a. Pulley with trapezoidal groove | 23. Groove of the bilge without rack |
| 12b. Small rack (reducer) | 24. Access lid for maintenance |

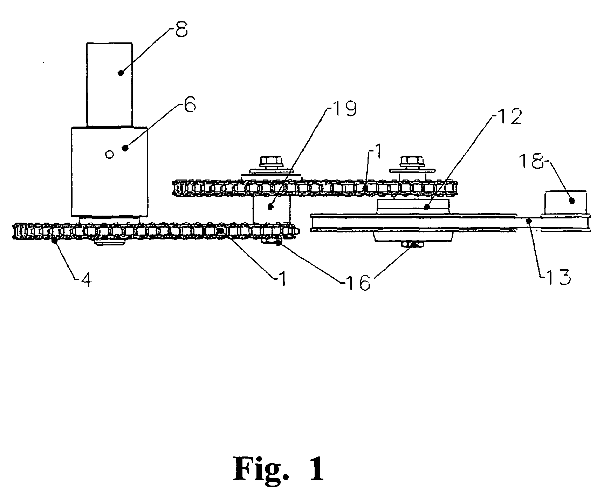

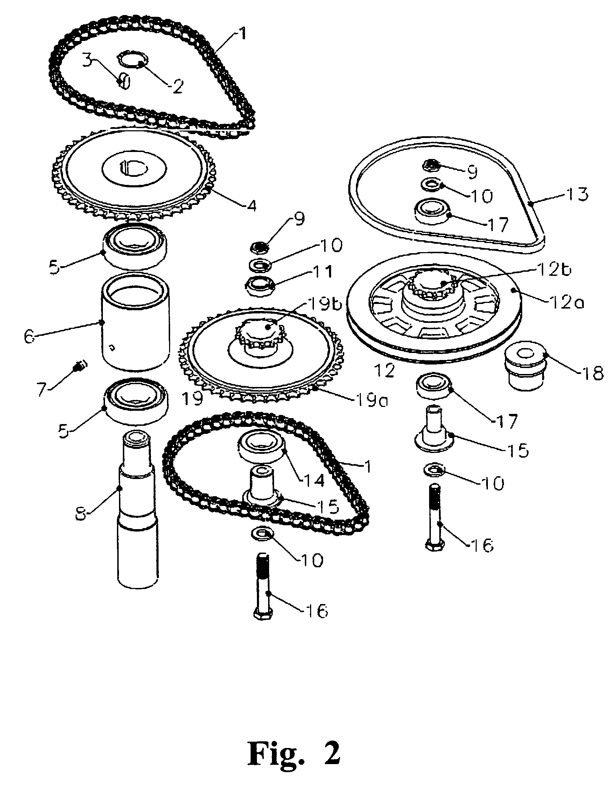

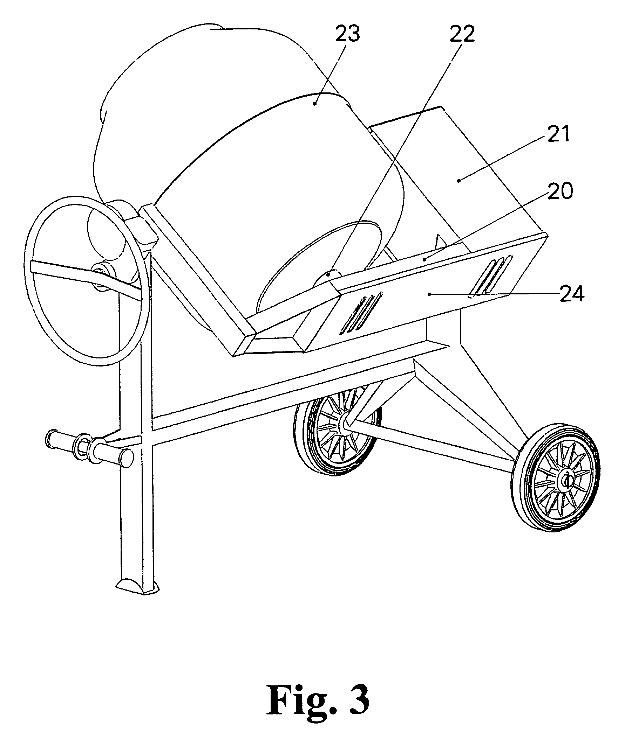

## Claims

1. A concrete mixer comprising a motor shaft and a bucket rotation shaft (8) arranged parallel to each other and connected by a three stage transmission reducer, each transmission stage connecting a small diameter wheel and a large diameter wheel arranged to each other on parallel axes, **characterized in that** said concrete mixer further comprises an arm in which said transmission reducer is directly set up and which is pivoted to a frame, said first transmission stage (18, 13, 12a) connecting said motor shaft and a first double wheel set (12) formed by a mixed pulley by means of a small driving pulley (18) directly applied to said motor shaft and at least one trapezoidal belt (13), said second transmission stage (12b, 1, 19a) connecting said mixed pulley (12) to a second double wheel set (19) formed by a double gear wheel set by means of a reinforced chain (1) and said third transmission stage (19b, 1, 4) connecting said second double gear wheel set (19) to said bucket shaft by means of a large diameter simple gear wheel (4) directly applied to said bucket shaft and a second reinforced chain (1), each of said double wheel sets (12, 19) comprising a small diameter wheel (12b, 19b) and a large diameter wheel (12a, 19a) arranged on an axis (16) that is parallel to said motor shaft and to said bucket shaft, the reference diameter of said driving pulley (18) and of said small diameter wheels (12b, 19b) being slightly bigger than the diameter of said motor shaft, all of said large diameter wheels (4, 12a, 19a) being approximately four times bigger than the reference diameter of said small driving pulley (18),

2. The concrete mixer according to claim 1, **characterized in that** said motor shaft comprises at least one groove for said at least one trapezoidal belt.

3. The concrete mixer according to claim 1, **characterized in that** the axes (16) of the mixed pulley (12) and the double gear wheel set (19) are equipped with locking anti-releasing means (16, 10, 15,14,17).

## Patentansprüche

1. Ein Betonmischer, der eine Motorwelle und eine Kübelrotationswelle (8) einschließt, die parallel zueinander angeordnet und durch ein dreistufiges Untersetzungsgetriebe verbunden sind, wobei jede Getriebestufe ein Rad mit kleinem Durchmesser und ein Rad mit großem Durchmesser verbindet, die zueinander auf parallelen Achsen angeordnet sind, **dadurch gekennzeichnet, dass** besagter Betonmischer ferner einen Arm einschließt, in welchem besagtes Untersetzungsgetriebe direkt eingespannt ist, und welcher gelenkig an einem Rahmen gelagert ist, wobei besagte erste Getriebestufe (18, 13, 12a) besagte Motorwelle und einen ersten durch eine Mischriemenscheibe gebildeten Doppelradsatz (12) mittels einer kleinen direkt an besagter Motorwelle angebrachten Antriebsriemenscheibe und wenigstens einen trapezförmigen Riemen verbindet, besagte zweite Getriebestufe (12b, 1, 19a) besagte Mischriemenscheibe (12) mit einem zweiten durch einen Doppelzahnradsatz gebildeten Doppelradsatz (19) mittels einer verstärkten Kette (1) verbindet und besagte dritte Getriebestufe (19b, 1, 4) besagten zweiten Doppelzahnradsatz (19) mit besagter Kübelwelle mittels einem einfachen direkt an besagter Kübelwelle angebrachten Zahnrad mit großem Durchmesser (4) und einer zweiten verstärkten Kette (1) verbindet, wobei jedes von besagten Doppelradsätzen (12, 19) ein Rad mit kleinem Durchmesser (12b, 19b) und ein Rad mit großem Durchmesser (12a, 19a) einschließt, die auf einer Achse (16), die parallel zu besagter Motorwelle und zu besagter Kübelwelle ist, angeordnet sind, wobei der Bezugsdurchmesser von besagter Antriebsriemenscheibe (18) und von besagten Rädern mit kleinem Durchmesser (12b, 19b) geringfügig größer ist als der Durchmesser von besagter Motorwelle, wobei alle besagten Räder mit großem Durchmesser (4, 12a, 19a) näherungsweise vier Mal größer sind als der Bezugsdurchmesser von besagter kleinen Antriebsriemenscheibe.

2. Der Betonmischer nach Anspruch 1, **dadurch gekennzeichnet, dass** besagte Motorwelle wenigstens eine Auskehlung für besagten wenigstens einen trapezförmigen Riemen einschließt.

3. Der Betonmischer nach Anspruch 1, **dadurch gekennzeichnet, dass** die Achsen (16) der Mischriemenscheibe (12) und des Doppelzahnradsatzes (19) mit das Lösen verhindernden Arretierungsmitteln (16, 10, 15, 14, 17) ausgestattet sind.

## Revendications

1. Bétonnière comprenant un arbre moteur et un arbre de rotation de baquet (8) agencés parallèles entre eux et reliés par un réducteur de transmission à trois stades, chaque stade de transmission reliant une roue de petit diamètre et une roue de grand diamètre agencées entre elles sur des axes parallèles, **caractérisée en ce que** ladite bétonnière comprend en outre un bras dans lequel ledit réducteur de transmission est directement fixé et qui est tourné vers un cadre, ledit premier stade de transmission (18, 13, 12a) reliant ledit arbre moteur et un premier jeu de double roue (12) formé par une poulie mixte au moyen d'une petite poulie d'entraînement (18) directement appliquée audit arbre moteur et au moins une courroie trapézoïdale (13), ledit deuxième stade de transmission (12b, 1, 19a) reliant ladite poulie mixte (12) à un deuxième jeu de double roue (19) formé par un jeu de roue à double engrenage au moyen d'une chaîne renforcée (1) et ledit troisième stade de transmission (19b, 1, 4) reliant ledit deuxième jeu de roue à double engrenage (19) audit arbre de baquet au moyen d'une roue (4) de grand diamètre à engrenage simple directement appliquée audit arbre de baquet et à une deuxième chaîne renforcée (1), chacun desdits jeux de double roue (12, 19) comprenant une roue de petit diamètre (12b, 19b) et une roue de grand diamètre (12a, 19a) agencées sur un axe (16) qui est parallèle audit arbre moteur et audit arbre de baquet, le diamètre de référence de ladite poulie d'entraînement (18) et desdites roues de petit diamètre (12b, 19b) étant légèrement plus grand que le diamètre dudit arbre moteur, toutes lesdites roues de grand diamètre (4, 12a, 19a) étant approximativement quatre fois plus grandes que le diamètre de référence de ladite petite poulie d'entraînement (18).

2. Bétonnière selon la revendication 1, **caractérisée en ce que** ledit arbre moteur comprend au moins une rainure pour ladite au moins une courroie trapézoïdale.

3. Bétonnière selon la revendication 1, **caractérisée en ce que** les axes (16) de la poulie mixte (12) et du jeu de roue à double engrenage (19) sont équipés de moyens de blocage anti-libération (16, 10, 15, 14, 17).
